# EUROPÄISCHE PATENTSCHRIFT

(11) **EP 0 852 802 B1**
(45) Veröffentlichungstag und Bekanntmachung des Hinweises auf die Patenterteilung: **24.11.1999**
(21) Anmeldenummer: 96938956.8
(22) Anmeldetag: 27.09.1996
(51) Int. Cl.: H01F 6/00, H02J 15/00

(54) **SUPRALEITENDES TORUSFÖRMIGES MAGNETSYSTEM**
SUPERCONDUCTIVE TOROIDAL MAGNET SYSTEM
SYSTEME MAGNETIQUE SUPRACONDUCTEUR EN FORME DE TORE

(30) Priorität: 29.09.1995 DE 19536469
(43) Veröffentlichungstag der Anmeldung: 15.07.1998
(73) Patentinhaber: SIEMENS AKTIENGESELLSCHAFT, 80333 München (DE)
(72) Erfinder: NICK, Wolfgang, D-50968 Köln (DE)
(86) Internationale Anmeldenummer: DE9601863
(87) Internationale Veröffentlichungsnummer: WO9713260

(56) Entgegenhaltungen:
- DE-A- 3 005 227
- FR-A- 2 618 955
- IEEE TRANSACTIONS ON MAGNETICS, Bd. 30, Nr. 4, PART 02, 1.Juli 1994, Seiten 1742-1745, XP000459173 COULL L ET AL: "LHC MAGNET QUENCH PROTECTION SYSTEM"
- PATENT ABSTRACTS OF JAPAN vol. 94, no. 011 & JP 06 325933 A (HITACHI LTD), 25.November 1994,

## Beschreibung

In der elektrischen Energietechnik wird in jüngerer Zeit untersucht, inwieweit supraleitende Magnetsysteme zur Speicherung von elektrischer Energie geeignet und rentabel sind. Derartige Systeme sind auch unter der Abkürzung SMES (Supraleitender Magnetischer Energiespeicher) bekannt.

Ein supraleitender Energiespeicher ist beispielsweise aus der EP 0 348 465 B1 bekannt. Der dort beschriebene Stromspeicher weist ein torusförmiges Spulensystem mit einer Vielzahl von Teilspulen auf. Zum Laden oder Entladen der gesamten Anordnung sind die jeweiligen Teilspulen oder Spulensegmente wahlweise in Serie oder parallel schaltbar und mit einer Versorgungseinrichtung verbindbar. Dabei ist auch vorgesehen, daß zum Beispiel für das Laden nur ein Teil der Spulensegmente zusammengeschaltet werden. Die Verschaltung der Spulensegmente kann beim Laden und beim Entladen auch unterschiedlich sein. Es ist auch möglich, den Energiespeicher mit Serienschaltung eines Teils der Spulensegmente oder aller Spulensegmente zu laden und in Parallelschaltung zu entladen.

Bei derartigen supraleitenden Magnetsystemen kann ein sogenannter Quenchfall auftreten, der als ein Auslegungs-Störfall anzusehen ist. Dabei wird im an einer Stelle im Supraleiter die Supraleitung durch eine Temperaturüberhöhung unterbrochen.

Auslösendes Ereignis kann eine sehr kleine, lokale Energiefreisetzung sein, die zur einer Temperaturerhöhung von nur wenigen Grad führt. Da der Supraleiter oberhalb seiner sogenannten Sprungtemperatur aber normalleitend ist, das heißt hoch resistiv wird, muß der elektrische Strom durch sogenanntes Stabilisierungsmaterial, zum Beispiel gut leitfähiges Kupfer, übernommen werden in das der Supraleiter eingebettet ist. Dies führt durch sogenannte Joule'sche Verluste zu einer weiteren lokalen Erwärmung, wobei sich die Wärme ausbreitet und die normalleitende Zone wächst.

Ohne Gegenmaßnahmen wäre dieser Prozess erst abgeschlossen, wenn die gesamte induktiv im Magnet des Systems gespeicherte Energie dissipiert ist. Bei großen gespeicherten Energiemengen könnte die Temperatur der heißen Zone (Hot Spot) so hoch werden, daß es zu einer Zerstörung des Magneten kommt.

Zur Abhilfe kann entweder möglichst viel Energie extrahiert werden (Fall a) oder die erwärmte Zone im Magnetsystem wird räumlich vergrößert, so daß die resultierende Maximaltemperatur nicht so hoch ist (Fall b).

Im Fall a ist bei großen gespeicherten Energiemengen eine Begrenzung durch die Entladespannung gegeben (wegen P = U x I !). Je höher die Spannung ist, desto schneller kann die Energie extrahiert werden. Um so niedriger ist dann auch die erreichte Maximaltemperatur.

Im Fall b müssen weitere Quenchorte im Magnetsystem erzeugt werden. Dies ist zum Beispiel durch extern versorgte Quenchheizer möglich. Hier ist jedoch die Sicherheit des Magnetsystems im Quenchfall nach einer Quencherkennung von der Auslösung und der Funktionssicherheit der Quenchheizer abhängig. Nach Erzeugung dieser sogenannten Sekundärquenchs muß gegebenenfalls das gesamte Spulensystem schließlich kaltgefahren werden, bevor der Betrieb wieder aufgenommen werden kann. Bis dahin steht das Spulensystem nicht zur Verfügung.

Aus der US-PS 5,146 383 ist ein supraleitendes magnetisches Energiespeichersystem bekannt, bei dem mehrere Magnetsysteme in zwei Gruppen aufgeteilt sind. Die beiden Gruppen wiesen jeweils eine zugeordnete Versorgungseinrichtung auf. Dabei sind Mittel zur gegenseitigen Stromübernahme zwischen den Gruppen vorgesehen. Die Magnetsysteme der jeweiligen Gruppen sind dabei elektrisch in Reihe geschaltet.

Der Erfindung liegt die Aufgabe zugrunde, ein supraleitendes Magnetsystem anzugeben, bei dem auf einfache Weise beim Auftretens eines Quench der Betrieb zumindest teilweise aufrechterhalten werden kann, wobei möglichst wenig Energie dissipiert werden soll.

Die Aufgabe wird erfindungsgemäß gelöst mit einem supraleitenden torusförmigen Magnetsystem mit mehreren ringförmig angeordneten Magnetsegmenten, die in zumindest zwei Gruppen unterteilt sind, wobei die Magnetsegmente der jeweiligen Gruppen elektrisch an eine jeweils gemeinsame Versorgungseinrichtung angeschlossen sind, die Mittel zur gegenseitigen Stromübernahme zwischen den Gruppen umfassen.

Auf diese Weise ist ein ökonomisches Schutzkonzept für das Magnetsystem gegeben, bei dem im Quenchfall die Erwärmung auf die betroffene Gruppe begrenzt werden kann. Die Entladung erfolgt also nur für die betroffene Gruppe, so daß das Gesamtsystem trotz Quench noch immer mit der Leistung der übrigen Gruppen verfügbar ist. Es erfolgt quasi eine automatische Erzeugung von Sekundärquenchs. Dabei werden weitgehend physikalisch automatische Mechanismen verwendet, die eine zuverlässige Funktion des Magnetsystems erlauben, ohne daß aufwendige Regeleinrichtungen benötigt werden. Darüber hinaus steht das erfindungsgemäße Magnetsystem nach einem Ausfall schneller wieder zur Verfügung als ein System nach dem Stand der Technik. Es kann also im Fehlerfall die Energie des Systems quasi extrahiert oder dissipiert werden.

Bevorzugt sind die Magnetsegmente der Gruppen wechselweise ringförmig angeordnet. Auf diese Weise ist eine gleichmäßige Kraft- und Energieverteilung gegeben.

Die Magnetsegmente einer Gruppe sind bevorzugt in Reihe geschaltet. Auf diese Weise gestaltet sich der Aufbau und die Leiterführung sehr einfach, wobei der Betriebszustand aller einzelnen Magnete unabhängig von eventuellen Unsymmetrien immer gut definiert ist.

Die Versorgungseinrichtungen der jeweiligen Gruppen können von einem Umrichter gebildet sein, der gegebenenfalls rechnergesteuert sein kann. Dadurch ist eine schnelle und zuverlässige Regelung und Steuerung des Magnetsystems möglich, wobei spezielle Betriebsweisen oder -verfahren oder Überwachungen als Programm im Rechner ausgebildet sind. Dies betrifft insbesondere die Funktion der Stromübernahme, die den Energieausgleich im Magnetsystem herstellt.

Das Magnetsystem findet bevorzugt Anwendung als Energiespeicher mit großen Energieinhalt zur Reservehaltung oder Pufferung von Energie in Hoch- oder Mittelspannungsnetzen. Ein derartiges Magnetsystem ist schnell verfügbar und aufgrund der hohen Betriebssicherheit bezüglich eines Ausfalls im Quenchfall sehr zuverlässig.

In einer bevorzugten Ausführungsform weist das Magnetsystem lediglich zwei Gruppen mit jeweiliger Versorgungseinrichtung auf. Auf diese Weise hat jedes Magnetsegment eine symmetrische Umgebung, was bezüglich der Kräfte im Magnetsystem sehr günstig ist.

Mit Vorteil sind Sensormittel zur Erfassung eines Quenchereignisses vorgesehen, die über eine Überwachungseinsrichtung mit den Versorgungseinrichtungen verbunden sind. Damit kann eine gezielte Steuerung der Energieverlagerung oder auch Regelung durchgeführt werden. Dies ist insbesondere für einen aktiven Eingriff im Störfall günstig.

Die Versorgungseinrichtungen weisen als Mittel zur gegenseitigen Stromübernahme einen niederohmigen Innenwiderstand auf. Dadurch ist eine besonders einfache Ausgestaltung gegeben. Bereits durch diese Ausführung ist ein verbessertes Verhalten gegenüber dem Stand der Technik gegeben.

Es ist günstig, wenn die Gruppen galvanisch getrennt ausgeführt sind. Dadurch sind geringere Spannungen gegen Masse möglich.

Die Erfindung, weitere Details und Vorteile werden nachfolgend anhand eines Ausführungsbeispiels und der Zeichnung näher erläutert. Es zeigen:
- FIG 1: ein elektrisches Ersatzschaltbild für ein Magnetsystem mit zwei Gruppen,
- FIG 2: eine Prinzipdarstellung eines Magnetsystems mit zwei Gruppen, und
- FIG 3: eine schematische räumliche Darstellung der Magnetsegmente des Magnetsystems.

Der vorliegenden Idee liegt das Ziel zugrunde, bei einem supraleitenden Magnetsystem eine Zerstörung durch Überhitzung eines Hot Spots im Quenchfall zu verhindern. Dabei müssen störende Nebeneffekte, insbesondere inakzeptable Kräfte, verhindert werden.

Hierzu ist vorgesehen, daß ein supraleitendes torusförmiges Magnetsystem in zwei Teilkreise aufgeteilt ist, so daß wechselweise ein Magnetsegment zur einer Gruppe a bzw. b gehört (unter Magnetsegment wird hier auch ein Magnet oder besser eine Magnetspule verstanden). Dadurch wird erreicht, daß auch bei unterschiedlichen Strömen in beiden Gruppen jedes Magnetsegment immer eine symmetrische Umgebung hat. Es treten also keine resultierende Kräfte in Umfangsrichtung auf. Die Zentralkraft bleibt gleich oder zumindest in Größenordnung des Normalbetriebs (I1 = I2).

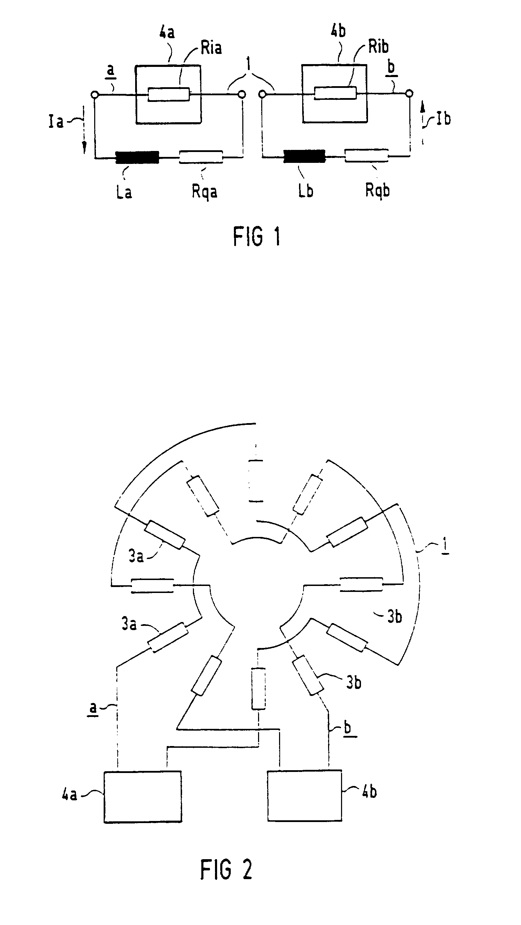

Anhand von FIG 1 wird nachfolgend zunächst das Verhalten des neuen geteilten Magnetsystems im Quenchfall erläutert. Dabei sind Bauelemente mit gleicher Gruppenzugehörigkeit mit gleichen Indizes versehen (Beisp.: Gruppe a, Spule La).

Die FIG 1 zeigt das Ersatzschaltbild für das Magnetsystem, bei dem zwei Induktivitäten La und Lb jeweils die effektive Gesamtinduktivität (einschließlich ihrer jeweiligen Induktivität aus Wechselwirkungen) der Gruppen a bzw. b repräsentieren. Die Induktivitäten La und Lb (oder die Magnete) der Gruppen a bzw. b sind miteinander stark induktiv gekoppelt. Die Widerstände Rqa und Rqb symbolisieren die jeweiligen Quenchwiderstände, die im ungestörten Betrieb vernachlässig-bar gering sind.

Die Gruppen a und b sind mit ihren Induktivitäten La bzw. Lb jeweils an eine zugehörige Versorgungseinrichtungen 4a bzw. 4b angeschlossen. Diese weisen jeweils einen Innenwiderstand Ria bzw. Rib auf. Die Innenwiderstände Ria, Rib sind niederohmig ausgeführt, wobei die induktive Kopplung zwischen ihnen - oder besser: zwischen den Versorgungseinrichtungen 4a,4b - klein ist.

Ein Quench in der Gruppe a erzeugt ein Ansteigen des Widerstands Rqa, was ein Ansteigen der an ihm abfallenden Spannung (ohmsche Spannung) und letztlich ein Absinken des Stromes Ia durch die Induktivität La zur Folge hat. Als Resultat steigt der Strom Ib an, da der Fluß durch die Anordnung, bestehend aus den gekoppelten Induktivitäten La und Lb, konstant bleiben möchte. Ein hoher Anstieg des Stromes Ib führt zur Auslösung von weiteren Quenchs an vielen Orten in den Magnetspulen der Gruppe b (parallel zur Induktivität Lb), nämlich überall dort, wo entweder eine maximale Induktion Bmax herrscht oder wo die erzeugenten AC-Verluste maximal sind.

Folge hiervon ist plötzlich ein starker ohmscher Spannungsanstieg im Widerstand Rqb, wodurch der Strom Ib wieder reduziert wird. Es entsteht eine Rückwirkung auf den Strom Ia, der nun wieder ansteigt. In der Folge werden dann in der Spule La weitere Sekundärquenchs erzeugt. Dieser Effekt des Wandern des Stromanstiegs von einer Gruppe zur anderen kann als "Stromschaukel" bezeichnet werden. Bevorzugt sind die Gruppen galvanisch getrennt, wodurch geringe Spannungen gegen Masse möglich sind.

Die "Stromschaukel" wird mit physikalischen Mitteln, im einfachsten Fall nämlich bereits durch die niederohmigen Ausgänge der jeweiligen Versorgungseinrichtungen (Umrichter oder Netzgeräte), - also ohne externes Eingreifen - ermöglicht. Die Versorgungseinrichtungen können dies Verhalten auch zusätzlich noch aktiv unterstützen, wodurch eine schnellere und sichere Entladung des Systems möglich ist. Dabei sind die folgenden Fälle zu unterscheiden:
a) Es sollen Sekundärquenchs erzeugt werden und
b) es soll möglichst viel Energie in die nicht betroffene Gruppe übertragen oder "gerettet" werden. Die nicht betroffene(n) Gruppe(n) soll(en) dabei jedoch nicht quenchen.

### Fall a)

Nach einer Quenchdetektion durch Sensormittel erzeugt die Versorgungseinrichtung in der quenchenden Gruppe eine Spannung, die den Strom in der Gruppe möglichst schnell reduziert. In der nicht betroffenen Gruppe wird umgekehrt verfahren: Dort wird eine Spannung erzeugt, die die induktive Wirkung verstärkt, wodurch der Strom erhöht wird. Eine Grenze der Stromhöhe stellt dabei die Stromtragfähigkeit der Komponenten oder Bauteile der Versorgungseinrichtung, insbesondere die Halbleiter der Umrichter, dar.

Wenn dann nachfolgend Quenchereignisse in dieser Gruppe ausgelöst wurden, z.B. durch Überschreiten des kritischen Stromes oder wegen Wechselstromverlusten, wird die Verfahrensweise der beiden Versorgungseinrichtungen umgetauscht. Die jeweiligen Versorgungseinrichtungen 4a oder 4b stoßen also jeweils die Quenchereignisse in der jeweiligen Gruppe a bzw. b an, wodurch die Stromschaukel angeregt ist. Sie weisen also eine Anregefunktion auf. Vorteil dieser Verfahrensweise mit einer solchen Strategie ist, daß die Energie weitgehend im System verteilt oder dissipiert wird.

### Fall b)

Nach einer Quenchdetektion erzeugt die Versorgungseinrichtung der quenchenden Gruppe eine Spannung, die den zugeordneten Strom möglichst schnell reduziert. In der anderen Gruppe wird durch die zugeordnete Versorgungseinrichtung der Strom bis auf eine vorbestimmte Höhe, gegebenenfalls mit begrenzter Geschwindigkeit, derart erhöht, daß hier zwar kein Sekundärquench erzeugt wird, jedoch soviel Energie wie möglich gespeichert bleibt. Dabei sollen insbesondere keine Quenchereignisse durch AC-Verluste ausgelöst werden.

Anschließend muß die Versorgungseinrichtung dieser Gruppe die von der quenchenden Gruppe weiter hervorgerufenen induktiven Spannungen kompensieren, bis der Strom auf Null abgefallen ist. Insofern wird Energie aus der einen Gruppe in die andere Gruppe magnetisch herübergekoppelt und dort extrahiert. Vorteil dieser Verfahrensweise ist, daß sogar noch im Quenchfall ein Energiespeicher verfügbar ist.

Zur Erfassung eines Quench können nicht näher gezeigte Sensormittel, insbesondere Quenchdetektoren, vorgesehen sein, die über geeignete Überwachungseinrichtungen mit den Steuereinrichtungen der Versorgungseinrichtungen verbunden sind. Die Sensormittel sind speziell im Falle einer geregelten Stromschaukel erforderlich. Somit kann im Falle eines Quench gezielt automatisch eingegriffen werden.

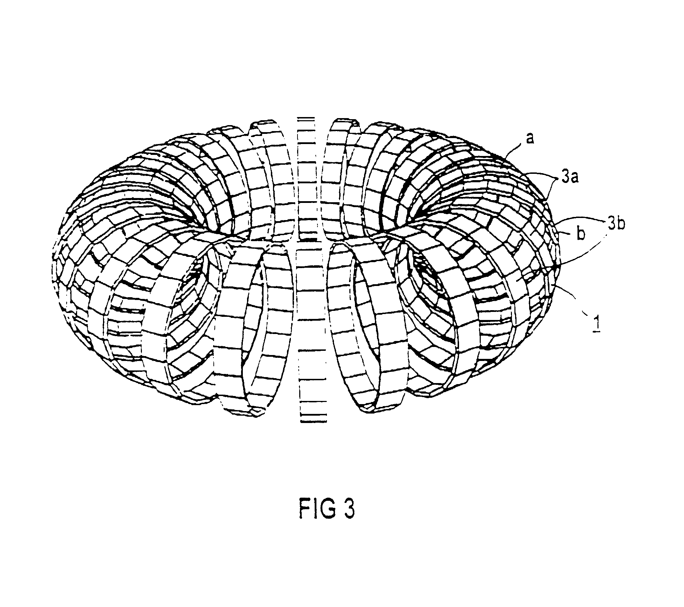

FIG 2 zeigt einen Aufbau des neuen Magnetsystems 1 in einer Prinzipdarstellung. Eine schematische räumliche Darstellung des Magnetsystems 1 mit einer Vielzahl Magnetsegmenten 3a,3b ist in FIG 3 gezeigt.

Wie nach dem Stand der Technik weist das Magnetsystems 1 ringförmig angeordnete Magnete oder Magnetspulen auf, die als supraleitende Magnetsegmente 3a, 3b ausgebildet sind und eine torusförmige Form bilden. Sie sind dabei in einem nicht näher gezeigten Kyrostatgefäß mit entsprechender Kühleinrichtung angeordnet. Die Magnetsegmente 3a,3b sind in zwei Gruppen (Gruppe a und b) aufgeteilt. Die Magnetsegmente 3a,3b der jeweiligen Gruppen a bzw.b sind dabei wechselweise ringförmig angeordnet ( also abwechselnd jeweils ein Magnetsegment von Gruppe a und dann von Gruppe b). Die Magnetsegmente 3a,3b einer Gruppe a bzw.b sind jeweils in Reihe geschaltet und mit einer zugeordneten Versorgungseinrichtung 4a bzw. 4b verbunden.

Die Versorgungseinrichtungen 4a,4b sind bevorzugt als rechnergesteuerte Umrichter ausgebildet. Sie weisen hierzu nicht näher gezeigte Steuereinrichtungen auf, die mit geeigneten Steuer- und Regelungsprogrammen versehen sind. Gegebenenfalls weisen sie auch Überwachungs- und Schutzeinrichtungen zur Detektion von Fehlern, insbesondere von Quenchfällen, im Magnetsystem 1 auf.

Wegen der Verteilung der Quenchereignisse auf relativ viele Orte kann das Magnetsystem die eigene vorher gespeicherte Energie intern verteilen, ohne auf eine externe Abgabemöglichkeit angewiesen zu sein. Die Erwärmung wird also auf das gesamte Magnetsystem verteilt, ohne daß eine maximale Temperatur überschritten wird.

Darüber hinaus besteht vorliegend die Möglichkeit eine Gruppe nach extern zu entladen (z.B. über die als Umrichter ausgebildete Versorgungseinrichtung 4a,4b). Dadurch ergeben sich weitere Vorteile, falls die betroffene Gruppe schnell entladen werden kann:
- Durch eine entsprechende Steuerung kann so viel Energie wie die nichtbetroffene Gruppe noch speichern kann in diese Gruppe "hinübergerettet" oder ausgelagert werden; es findet also eine Energie-Umverteilung statt (gegebenenfalls auch ohne Auslösung von Sekundärquenchs);
- die funktionsfähige Gruppe kann weiterbetrieben werden, so daß das Magnetsystem im vorliegenden Fall noch mit zumindest einen großen Teil seiner Kapazität verfügbar ist (Not- oder Hilfsbetrieb);
- da nur eine Gruppe vom Quenchfall betroffen ist, kann die Leistung der Kühleinrichtung für das Magnetsystem gegebenenfalls voll auf diese Gruppe konzentriert werden, was eine maximale Rückkühlgeschwindigkeit zur Folge hat.

Daraus ergibt sich eine nur kurze Ausfallzeit der gesamten Anordnung. Im Hinblick auf ein erhöhtes magnetisches Streufeld während des unsymmetrischen Betriebs ist es wichtig, daß eine möglichst symmetrische Zuordnung der Magnete der beiden Gruppen gegeben ist.

Prinzipiell sind auch die folgenden Ausgestaltungen des Magnetsystems denkbar, für deren Ausführbarkeit gegebenenfalls bestimmte Randbedingungen oder technische Lösungen geschaffen werden müssen und die unter Umständen nicht so vorteilhaft wie die oben beschriebene Lösung sind.

Es sind auch drei oder noch mehr Gruppen möglich, wobei sich die Gruppenanzahl im wesentlichen nach einer Abwägung von wirtschaftlichen und Betriebssicherheits- Gesichtspunkten ergibt. Dabei können auch mehrere Magnete einer Gruppe gemeinsam Ringsegmente bilden, wobei die Ringsegmente der Gruppen wechselweise ringförmig angeordnet sind. Auf diese Weise ist quasi eine Blockbildung der Gruppen gegeben, wodurch gegebenenfalls eine günstige Fertigung oder Verschaltung beim Aufbau gegeben ist.

Die Magnetsegmente können auch parallel oder auch nur teilweise parallel geschaltet sein. Dadurch ist eine gute Anpassung an die jeweiligen Anforderungen beim Laden oder Entladen des Magnetsystems möglich. Zusätzlich können auch einzelne Magnetsegmente zumindest teilweise abschaltbar oder überbrückbar sein. Dadurch wäre das Magnetsystem optimal die jeweilige Leistungs- oder Betriebssituation angepaßt. Dazu sind gegebenenfalls auch entsprechende Schaltmittel zusätzlich erforderlich die gegebenenfalls heute noch nicht verfügbar sind.

### Bezugszeichenliste

- 1: Magnetsystem
- 3a, 3b: Magnetsegmente
- 4a,4b: Versorgungseinrichtung

- a , b: Gruppe
- Ria, Rib: niederohmiger Innenwiderstand
- Rqa,Rqb: Quenchwiderstand
- La, Lb: Induktivität

## Patentansprüche

1. Supraleitendes torusförmiges Magnetsystem (1a,1b) mit mehreren ringförmig angeordneten Magnetsegmenten (3a,3b), die jeweils einer von zumindest zwei Gruppen (a,b) zugeordnet sind, wobei die Magnetsegmente (3a,3b) der jeweiligen Gruppen (a,b) an eine jeweils gemeinsame Versorgungseinrichtung (4a,4b) angeschlossen sind, die Mittel zur gegenseitigen Stromübernahme zwischen den Gruppen (a,b) umfassen, wobei die Magnetsegmente (3a,3b) der jeweiligen Gruppen (a,b) wechselweise ringförmig und jeweils elektrisch in Reihe geschaltet sind.

2. Magnetsystem nach Anspruch 1, wobei die Versorgungseinrichtungen (4a,4b) als rechnergesteuerte Umrichter ausgebildet sind.

3. Magnetsystem nach einem der Ansprüche 1 bis 2, wobei Sensormittel, insbesondere ein Quenchdetektor, zur Erfassung eines Quenchereignisses vorgesehen sind, die über zumindest eine Überwachungseinrichtung mit den jeweiligen Steuereinrichtungen der Versorgungseinrichtungen (4a,4b) verbunden sind.

4. Magnetsystem nach einem der Ansprüche 1 bis 3, wobei die Versorgungseinrichtungen (4a,4b) als Mittel zur gegenseitigen Stromübernahme einen niederohmigen Innenwiderstand aufweisen.

5. Magnetsystem nach einem der Ansprüche 1 bis 4, wobei die Gruppen (a,b) galvanisch getrennt sind.

6. Magnetsystem nach einem der Ansprüche 1 bis 5, welches Magnetsystem als Energiespeicher dient.

## Claims

1. Superconducting toroidal magnet system (1a,1b) with several annularly arranged magnet segments (3a,3b), each of which is allocated to one of at least two groups (a,b), wherein the magnet segments (3a,3b) of the respective groups (a,b) are connected to a respectively common supply device (4a,4b), which comprises means for the mutual current transfer between the groups (a,b), wherein the magnet segments (3a,3b) of the respective groups (a,b) are connected alternately in rings and are each connected electrically in series.

2. Magnet system according to claim 1, wherein the supply devices (4a,4b) are constructed as computer-controlled inverters.

3. Magnet system according to one of claims 1 to 2, wherein sensor means, in particular a quench detector, are provided for the detection of a quench event, which are connected by way of at least one monitoring device to the respective control devices of the supply devices (4a,4b).

4. Magnet system according to one of claims 1 to 3, wherein the supply devices (4a,4b) have a low-resistance internal resistance as means for the mutual current transfer.

5. Magnet system according to one of claims 1 to 4, wherein the groups (a,b) are galvanically separated.

6. Magnet system according to one of claims 1 to 5, the magnet system being used as an energy store.

## Revendications

1. Système (1a, 1b) magnétique supraconducteur en forme de tore, comportant plusieurs segments (3a, 3b) d'aimants qui sont montés de manière annulaire et qui sont associés chacun à l'un d'au moins deux groupes (a, b), les segments (3a, 3b) d'aimants des groupes (a, b) associés étant raccordés chacun à un dispositif (4a, 4b) d'alimentation commun, qui comprennent des moyens pour le transfert mutuel de courant entre les deux groupes (a, b), les segments (3a, 3b) d'aimants des groupes (a, b) associés étant branchés alternativement de manière annulaire et en série du point de vue électrique.

2. Système magnétique suivant la revendication 1, les dispositifs (4a, 4b) d'alimentation étant réalisés en mutateurs commandés par ordinateur.

3. Système magnétique suivant l'une des revendications 1 à 2, des moyens de détection, notamment un détecteur d'extinction, étant prévus pour détecter un événement d'extinction, ces moyens de détection étant reliés au dispositif de commande associé des dispositifs (4a, 4b) d'alimentation par l'intermédiaire d'au moins un dispositif de surveillance.

4. Système magnétique suivant l'une des revendications 1 à 3, les dispositifs (4a, 4b) d'alimentation comportant une résistance interne à basse impédance comme moyen pour le transfert mutuel de courant.

5. Système magnétique suivant l'une des revendications 1 à 4, les groupes (a, b) étant séparés du point de vue galvanique.

6. Système magnétique suivant l'une des revendications 1 à 5, ce système magnétique servant à l'accumulation d'énergie.
